## Europäisches Patentamt

## European Patent Office

## Office européen des brevets

(11) Veröffentlichungsnummer: **0 048 694**
**A2**

(12) # EUROPÄISCHE PATENTANMELDUNG

(21) Anmeldenummer: **81810381.4**

(22) Anmeldetag: **16.09.81**

(51) Int. Cl.³: **F 24 J 3/02**

(30) Priorität: **23.09.80 CH 7112/80**

(43) Veröffentlichungstag der Anmeldung:
**31.03.82 Patentblatt 82/13**

(84) Benannte Vertragsstaaten:
**AT DE FR GB IT**

(71) Anmelder: **Feller, Fritz**
**Sädel**
**CH-3115 Gerzensee(CH)**

(72) Erfinder: **Feller, Fritz**
**Sädel**
**CH-3115 Gerzensee(CH)**

(54) **Gefäss-System.**

(57) Das Gefäss-System weist auf Trägerprofilen (11) montierte Wärmetauscher-Elemente (1) auf. Diese Wärmetauscher-Elemente sind mittels kreuzschlittenartiger Montageorgane (16, 19) zug- und druckfest, aber in beliebiger Richtung gleitend mit den Trägerprofilen (11) verbunden. Die Wärmetauscher-Elemente (1) bestehen aus einer Mehrzahl von flachen oder längsgerillten Hohlprofilen (2), deren Kanäle vom Wärmeträger durchströmt sind. Die Hohlprofile sind mittels flexibler Schlauchbögen (7) mit seitlichen Sammelleitungen (9) verbunden. Die Sammelleitungen sind an einer Stelle, aber sonst längs verschiebbar in Halteprofilen (25). Alle Teile des Systems sind somit gegenseitig frei beweglich angeordnet, sodass auch bei grossflächigen Ausführungen keine Spannungen durch Temperaturunterschiede auftreten können.

FIG.4

## GEFAESS-SYSTEM

Die vorliegende Erfindung betrifft ein Gefäss-System für einen Wärmeträger, insbesondere Umwelt-Wärmetauscher, mit flachen Wärmetauscher-Elementen. Solche Wärmetauscher sind bekannt, und sie dienen entweder als Sonnenkollektoren oder aber als reine Wärmetauscher im Zusammenhang mit einer Wärmepumpe. Sie sind vorzugsweise auf einem Dach angeordnet und dienen der Aufnahme von Wärme aus der Umgebungsluft, gegebenenfalls auch zur Abgabe von Wärme an die Umgebung, wenn die Wärmepumpe zur Kühlung von Räumen in einer Klimaanlage eingesetzt ist.

Flache Wärmetauscher-Elemente, die aus flachen Kunststoffprofilen mit nebeneinanderliegenden Kanälen aufgebaut sind, wurden schon bekannt im Falle von relativ kleinflächigen, einzelnen Sonnenkollektoren. Es ergeben sich hierbei kaum Probleme inbezug auf die Wärmedehnung solcher Elemente. Bei grossflächigeren Objekten, wie sie in Anlagen mit Wärmepumpen erforderlich sind, um auch bei tiefen Umgebungstemperaturen noch genügende Wärmemengen auszutauschen, ergeben sich jedoch Probleme, weil die relativ grossen Wärmetauscher-Elemente einerseits derart lose montiert werden müssen, dass sie sich erheblich ausdehnen. bzw. zusammenziehen können, und weil sie anderseits genügend sicher verankert sein müssen, um erheblichen Beanspruchungen durch Wind widerstehen zu können.

Der vorliegenden Erfindung liegt die Aufgabe zugrunde, diese Aufgaben mit einem einfach und rasch montierbaren System zu lösen. Die Lösung besteht darin, dass die Wärmetauscher-Elemente in beliebiger Richtung verschiebbar auf Trägerprofilen angeordnet sind. Vorzugsweise sind dabei die Wärmetauscher-Elemente mittels kreuzschlittenartiger Montageorgane mit den Trägerprofilen verbunden. Es wird damit eine zug- und druckfeste Verbindung zwischen den Wärmeträger-Elementen und den Trägerprofilen erreicht und doch können sich die Wärmetauscher-Elemente beliebig dehnen und zusammenziehen.

Die Erfindung ist im folgenden anhand eines in der Zeichnung dargestellten Ausführungsbeispiels näher erläutert.

Figur 1 zeigt eine Draufsicht auf einen Wärmetauscher,

Figur 2 zeigt einen Ausschnitt aus Figur 1 in grösserem Masstab,

Figur 3 zeigt einen Schnitt nach Linie III/III in Figur 2,

Figur 4 zeigt einen Teilschnitt in noch grösserem Masstab,

Figur 5 ist eine räumliche Teilansicht zur Erläuterung der Montage der Wärmetauscher-Elementes und

Figur 6 zeigt einen Längsschnitt durch eine Sammelleitung.

Figur 7 und 8 zeigen eine Ausführungsform, bei welcher ein Profil 2 zu einer Spirale oder Schnecke geformt und in einem Käfig gehalten ist.

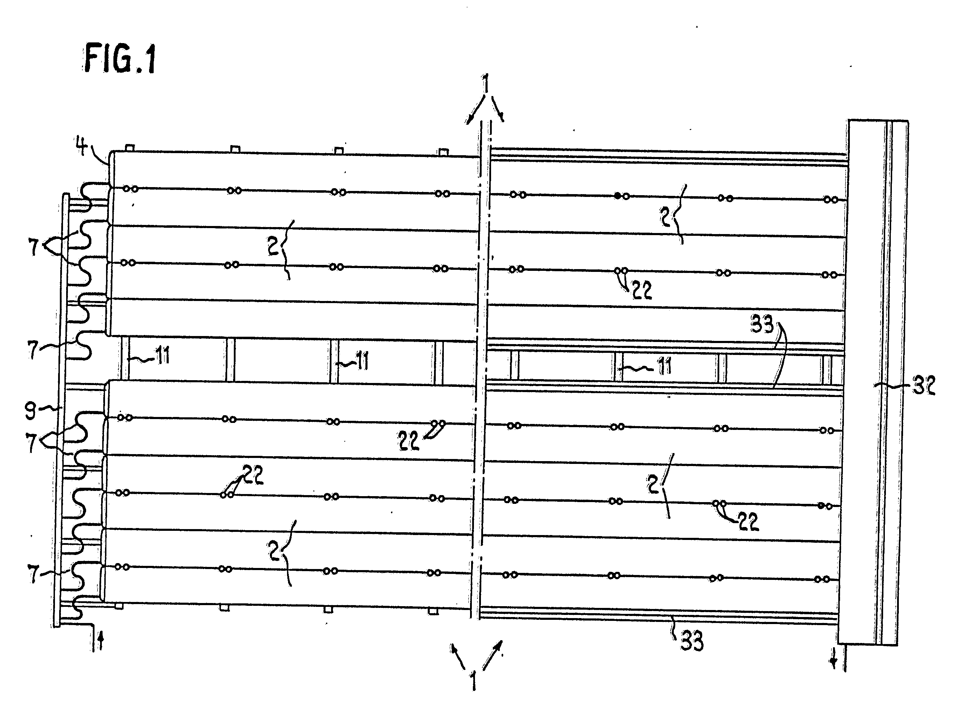

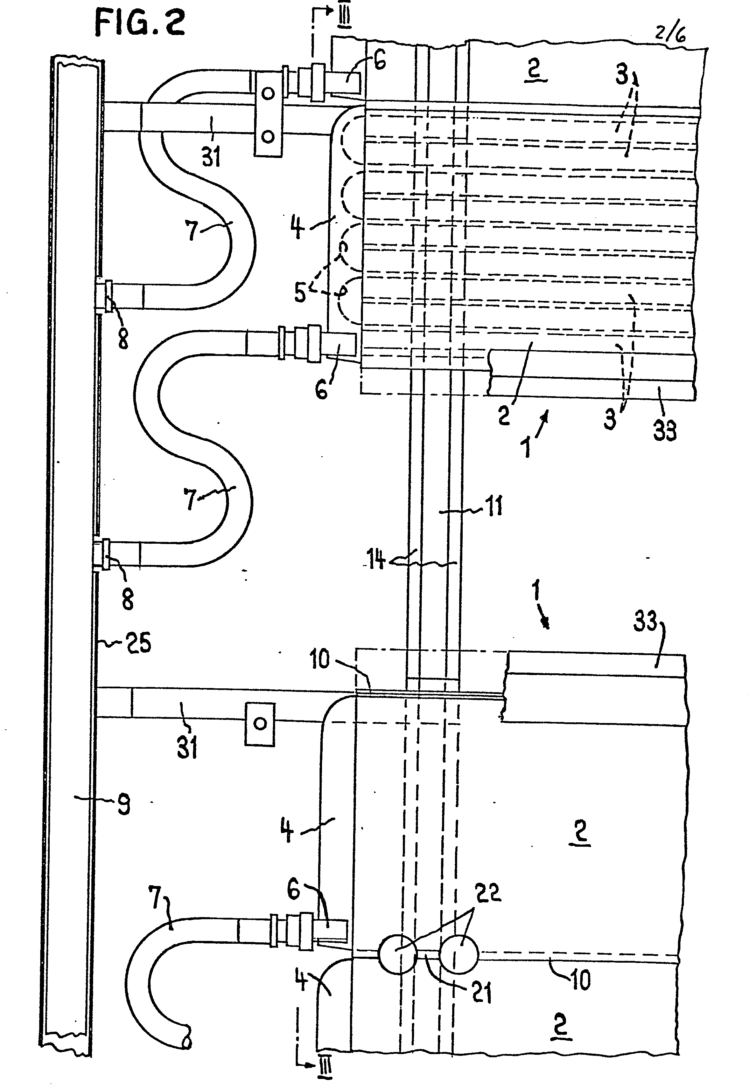

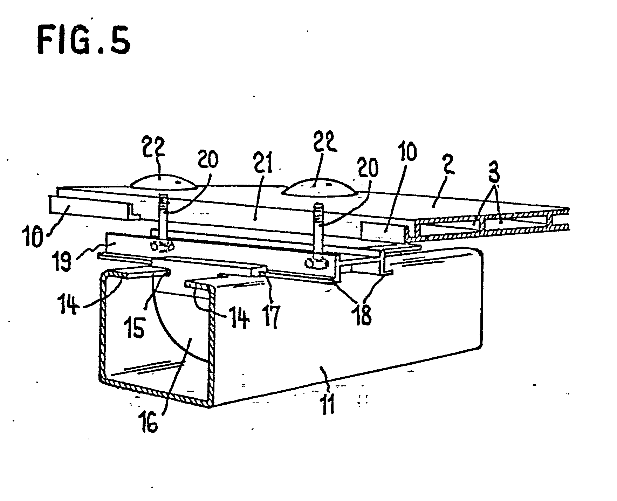

Figur 1 zeigt zwei Elemente 1 eines Wärmetauschers. Jedes dieser Elemente besteht aus einer Anzahl von flachen Hohlprofilen 2 aus Kunststoff, die mit parallelen Kanälen 3 versehen sind, wie insbesondere die Figuren 2 und 5 zeigen. Jedes Hohlprofil ist an beiden Stirnenden mit einem Anschlussstück 4 verbunden, das mit Verbindungskanälen 5 versehen ist, welche die einzelnen Kanäle 3 des Hohlkammerprofils in Serieschaltung verbinden. Jedes Anschlusstück 4 ist mit einem Anschluss-Stutzen 6 versehen, mit welchem ein flexibler nicht Knickbarem Schlauchbogen 7 verbunden ist, dessen anderes Ende mit einem Anschluss-Stutzen 8, einer Vor-oder Rücklaufsammelleitung 9 verbunden ist. Die Hohlprofile 2 sind an den Schmalseiten mit L-förmigen Verbindungsleisten 1o versehen, welche zur gegenseitigen Verbindung benachbarter Hohlprofile 2 ineinander greifen (Figur 5)

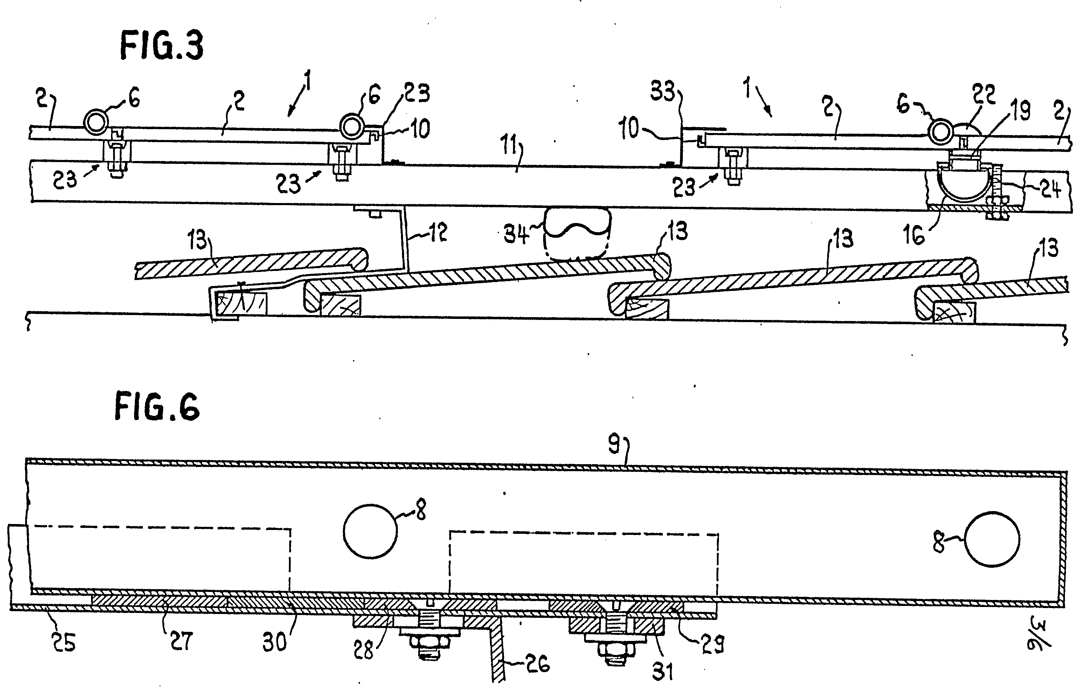

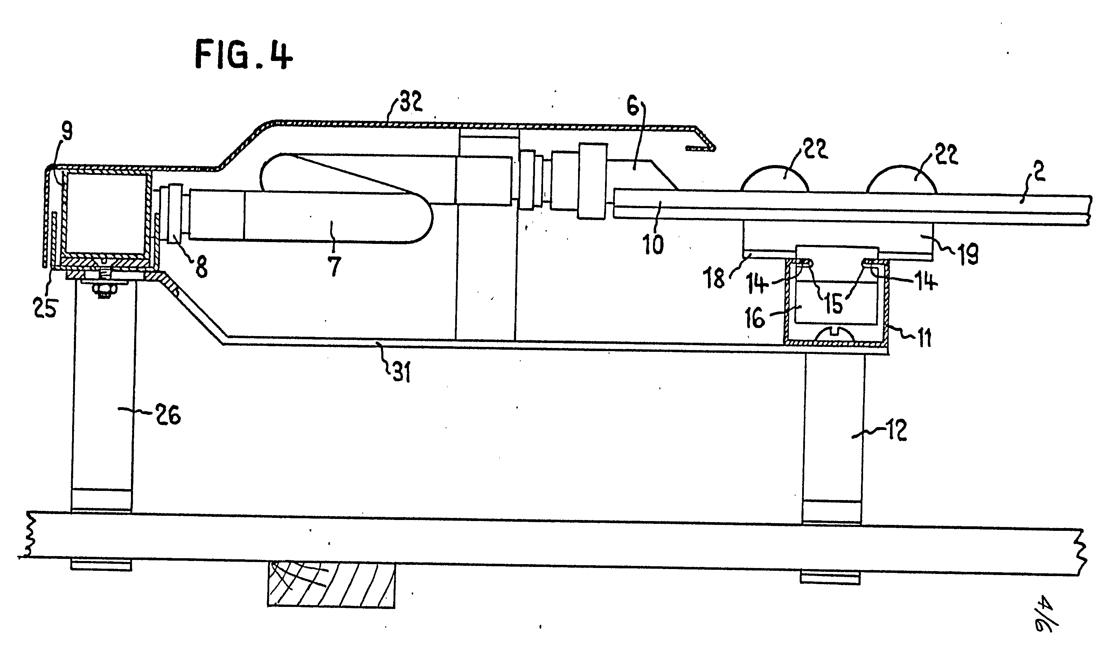

Die je aus einer Anzahl von miteinander verbundenen Hohlprofilen 2 bestehenden Wärmetauscher-Elemente sind auf Trägerprofilen 11 montiert, welche gemäss Figur 3 und Figur 4 mittels
Dachhaken 12 in der Fall-Linie des Daches montiert sind,
dessen Ziegel 13 der Einfachheit halber nur in Figur 3
angedeutet sind. Die Trägerprofile 11 sind oben offene
Rechteckprofile und ihre einwärts gerichteten Flansche 14
greifen mit etwas Spiel in Schlitze 15 eines etwa halbzylindrischen Unterteils 16 eines Kupplungsorgans. Die Unterteile
16 weisen quer zu den Schlitzen 15 verlaufende Schlitze 17
auf, in welche auswärts gerichtete Flansche 18 eines Oberteils 19 des Verbindungsorgans mit etwas Spiel frei verschiebbar eingreifen. Der Oberteil ist ein Profil von etwa H-förmigen Querschnitt, mit dessen Steg Gewindestifte 2o verschraubt
sind. Diese Gewindestifte durchragen eine durch Herausfräsen
der Verbindungsleisten 1o, zwischen benachbarten Hohlprofilen
2, entstehende Lücke 21 (Figur 5). Auf die beiden Gewinde -
stifte sind von oben Gegenmuttern 22 geschraubt, die oben
Löcher aufweisen, an welchen ein Spezialschlüssel zum Festziehen derselben angesetzt werden kann. Die Hohlprofile sind
also stellenweise fest mit den Oberteilen 19 des Montage -
organs verbunden. Dieses Montageorgan erlaubt, ähnlich einem
Kreuzschlitten, Relativbewegungen zwischen den Hohlprofilen
2 und den Trägerprofilen 11 in zwei rechtwinklig zueinander
stehenden Richtungen, d.h. es sind Relativbewegungen in beliebiger Richtung möglich. Ausser diesen Montageorganen, welche
eine zug- und druckfeste, aber bewegliche Verbindung zwischen
den Trägerprofilen 11 und den Hohlprofilen 2 herstellen, sind
mit den Trägerprofilen 11 auch einfache Stützelemente 23
(Figur 3) verschraubt, auf welchen die Hohlprofile 2 lose
aufliegen und im gewünschten Abstand von den Trägerprofilen
gehalten sind. Zur Montage können die Montageorgane und Stützorgane von einem Ende der Trägerprofile 11 her eingeschoben
und festgezogen werden, was eine rasche, eifache Montage erlaubt.

Die Wärmetauscher-Elemente müssen jedenfalls bei geneigter Anordnung gegen ein Abgleiten auf den Trägerprofilen 11 gesichert sein. Bei der geneigten Anordnung auf einem Dach,
gemäss Figur 3, sind zu diesem Zweck an den oberen Enden
jedes Wärmetauscher-Elementes Anschlagschrauben 24 mit den
Trägerprofilen 11 verschraubt, gegen welche die Unterteile
von auf gleicher Höhe liegenden Montageorganen anliegen und
ein Abgleiten des Wärmetauscher-Elementes verhindern.
Die Vor- und Rücklaufsammelleitungen 9 sind je in einem
U-förmigen Halteprofil 25 gehalten, welches mittels Dachbügeln 26 montiert ist. Für den Durchtritt der Stutzen 8
weist der eine Schenckel des Halteprofils 25 Lücken auf,
wie Figur 6 zeigt. Aus derselben Figur ist ersichtlich, dass
am einen Ende des Halteprofils 25 Verstärkungsbleche 27,28
und 29 angeschweisst sind. Zwischen die Bleche 27 und 28
greift ein mit der Sammelleitung 9 verschweisstes Blech 3o
und sichert damit die Sammelleitung gegen Herausgleiten aus
dem Halteprofil 25. Das Blech 28 dient zugleich zur Verankerung einer Befestigungsschraube für den Dachbügel 26. Das
Blech 29 dient der Abstützung einer Schraube zur Befestigung
eines Querträgers 31. Diese Querträger 31 sind, wie Figur 4
zeigt, auch auf den benachbarten Dachhaken 12 befestigt. Sie
dienen der Abstützung einer seitlichen Abdeckung 32 für die
Sammelleitungen 9, die Schlauchbögen 7, und die damit verbundenen Stutzen 6 und 8. In Figur 1 ist die Abdeckung nur
einseitig dargestellt. Abdeckungsprofile 33 sind auch an den
Längsseiten der Wärmetauscher-Elemente angebracht und auf den
Trägerprofilen 11 befestigt.

Wie erwähnt, erlaubt der dargestellte Wärmetauscher eine
freie Dilitation all seiner Teile in beliebiger Richtung.
Hierzu dienen auch die Lücken zwischen einzelnen aus mehreren Hohlprofilen 2 aufgebauten Elementen 1. Der relativ grossflächige Wärmetauscher ist gegen Zug- und Druckkräfte sicher
verankert. Trotzdem sind sein Aufbau und seine Montage einfach
und zwar auch an bestehenden Gebäuden, insbesondere Dächern.

Die tragenden Elemente 11 und 25 können einfach montiert werden und dann können die Montageorgane 16,19 eingeschoben, die Wärmetauscher-Elemente 1 aufgelegt und festgeschraubt werden. Auch die Anschlüsse sind einfach zu erstellen.

Die Anordnung der Wärmetauscher-Elemente 1 im Abstand vom bestehenden Bauwerk, beispielsweise Dach, hat den Vorteil, dass die Umgebungsluft über und unter den Elementen 1 zirkulieren kann, was einen besonders intensiven Wärmeaustausch erlaubt. Bei einer Temperatur der Umgebungsluft von plus $3^{\circ}$C können beispielsweise noch 350 Kcal/h pro m2 Wärmetauschfläche· ausgetauscht werden.

Während das Ausführungsbeispiel den Wärmetauscher auf einem geneigten Ziegeldach zeigt, kann er mittels geeigneter Befefestigungsvorrichtungen auf jeder anderen Unterlage, beispielsweise auf einem Flachdach, an einer Gebäudewand, auf einer Böschung oder sonstwie, z.B. als Zaun oder Sichtschutzwand angeordnet werden.-

Wie erwähnt, ist die Montage des Wärmetauschers besonders einfach. Bei den ersten Montagen, also ohne besondere Uebung, haben 3 Mann pro Tag 40 m2 auf geneigtem Dach ($45^{\circ}$) bei einer Profillänge von 11 m fertig montiert, nachdem die Trägerprofile 11 und Sammelleitungen 9 vormontiert worden waren. Auf einem Flachdach ist ohne weiteres die doppelte Leistung möglich. Das Gewicht der Profile ist gering, und diese können im allgemeinen ohne mechanische Hilfsmittel von Hand aufgezogen und montiert werden. Das Gewicht der verlegten Wärmetauscher-Elemente beträgt rund 20 Kg/m2 und das Gewicht eines mit Wärmeträger gefüllten Profils von 30 cm Breite und 11 m länge beträgt 30 Kg, so dass der Transport und das Verlegen von Hand auch unter etwas erschwerten Verhältnissen ohne weiteres möglich ist.

Es ist oben der Vorteil erwähnt worden, dass die im Abstand von einem bestehendem Baukörper, z.B. einem dach, angeordneten Wärmetauscher beidseitig wirksam werden können. Das ist wesentlich, wenn die Aussentemperaturen niedrig sind. Im Sommer bei direkter Sonneneinstrahlung wäre es jedoch vorteilhaft, die Wärmetauscher eher im Sinn von Sonnenkollektoren zu betreiben, in welchem Falle es erwünscht wäre, den Raum unter dem Wärmetauscher zu isolieren. Um beide Betriebsarten zu ermöglichen, können längs der Ränder der Wärmetauscher-Elemente aufblasbare Dichtungsschläuche angeordnet werden, die bei heissem Wetter aufgeblasen werden um unter den Elementen ein geschlossenes isolierendes Luftkissen zu erzeugen. In Fig.3 ist ein geeigneter aufblasbarer Schlauch 34 im drucklosen Zustand in ausgezogener Linie und in aufgeblasenem, am Dach anliegenden Zustand in strichpunktierter Linie angedeutet. Bisher ist angenommen worden, je mehrere Profile 2 werden stehts zu grösseren Austauschelementen gekuppelt. Es können jedoch z.B. auf einem Flachdach auch einzelne Profile in geeigneter Neigung (z.B. 35°) gegenüber dem Dach parallel zueinander angeordnet werden.

Die Profile 2 können auch in anderer Form als Wärmetauscher eingesetzt sein, z.B. als Deckenheizung in einem Raum. Wie eingangs erwähnt, können sie dabei wahlweise zum Heizen oder Kühlen verwendet werden, wobei ein und dieselbe Wärmepumpe verwendet werden kann, um wahlweise den in einem Innenraum befindlichen oder den aussen montierten Wärmetauscher zum Entzug oder zur Abgabe von Wärme zu benutzen.

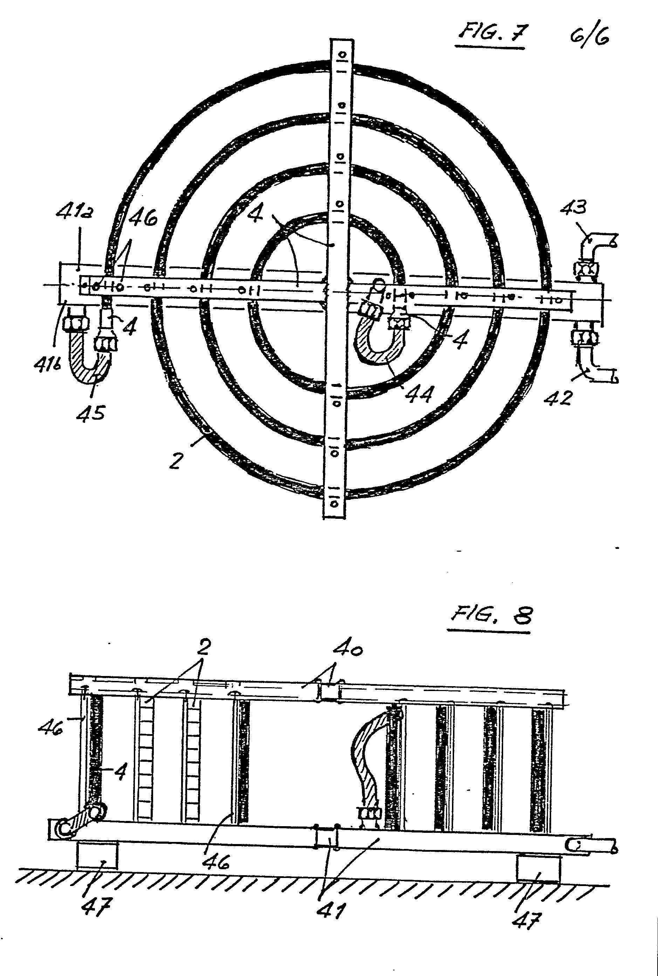

Die Figuren 7 und 8 zeigen eine Ausführungsform, bei welcher ein Profil 2 zu einer Spirale oder Schnecke geformt und in einem Käfig gehalten ist. Der Käfig weist ein oberes Kreuz 4o aus Metallprofilen und ein unteres Kreuz 41 aus Metallprofilen auf. Der eine Arm des unteren Kreuzes 41 besteht aus zwei parallelen Hohlprofilen 41a und 41b mit welchen die Vorlauf und Rücklaufleitung 42 und 43 des Wärmeträgerkreislaufes verbunden sind. Mit an den Profilen 42 und 43 angebrachten
Stutzen sind flexible Anschlussleitungen 44 und 45 verbunden,
die an die Anschlusstücke 4 an den Enden der Spirale des
Profils 2 angeschlossen sind. Die beiden Kreuze 4o und 41
sind durch Stäbe 46 verbunden, wobei die Enden des Profils 2
je zwischen zwei Stäben gehalten sind, während die übrigen
Windungen des Profils 2 je gegen einen ausserhalb des Profils
liegenden Stab anliegt. Die Spirale ist damit in dem aus den
Kreuzen 4o und 41 und den Stäben 46 gebildeten Käfig derart
beweglich gehalten, dass sie ungehindert die erheblichen Ausdehnungen und Kontraktionen bei grossen Temperaturunterschieden ausführen kann.

Die Ausführungsform nach Fig. 7 und 8 hat den erheblichen
Vorteil, dass sie an beliebiger Stelle vor dem Haus,z.B. im
Garten, ohne Baubewilligung aufgestellt werden kann. Sie wird
hierzu vorzugsweise auf Sockel 47 gestellt, damit die Umgebungsluft frei durch die Spirale zirkulieren kann. Die Oeffnung der Spirale kann auch in die Hauptwindrichtung gestellt
werden, damit eine optimale Durchlüftung und ein maximaler
Wärmetausch erziehlt wird. Ein Tauscher gemäss Fig.7 und 8
ist relativ leicht und kann ohne irgendwelche Hebezeuge manuell versetzt werden. Zur Erhöhung der Leistung können Spiralen aufeinandergesetzt werden, indem je das untere Kreuz 41
der oberen Spirale mit dem oberen Kreuz 4o der unteren Spirale verschraubt wird.Es können aber natürlich auch beliebig
viele Spiralen nebeneinander aufgestellt und parallel oder in
Serie in den Wärmeträgerkreislauf geschaltet werden. Die Aufstellung des Wärmetauschers im Freien erlaubt auch, mit demselben einen Brenner oder Verbrennungsmotor aufzustellen ohne
einen Kamin zu benötigen. Es kann somit in dem freien Raum
im Zentrum der Spirale ein Brenner im Zusammenbau eines
Verbrennungsraumes z.B. Kessel angeordnet werden, der bei
kaltem Wetter, z.B. bei Temperaturen unter + 2°C nachzuheizen
gestattet. Mit dem Brenner kann gegebenenfalls auch die Wärmepumpe im Zentrum der Spirale aufgestellt werden.

Schliesslich ist es auch möglich, in diesem Raum sowohl einen Verbrennungsmotor als auch eine durch denselben angetriebenen Wärmepumpe aufzustellen, wobei die gesamte Abwärme des Motors entweder ganz über die Spirale oder z.T. über einen besonderen Wärmetauscher ausgenutzt wird. Man kann bei einer solchen Anordnung mit einer Reduktion des Brennstoffverbrauchs gegenüber einer üblichen Heizanlage auf 10% rechnen. Es kann auch ein Ventilator vorhanden sein, um die Durchlüftung der Spirale zu intensivieren. Der Wärmetauscher kann auch im Wasser, Abwasser angeordnet werden. Schnee stellt kein Problem dar, indem er durch die Spirale durchfällt und die Wärmeübertragung bzw. die Erwärmung durch die Sonne nicht behindert.

Anstelle des Profils 2 mit einer Etage von Kammern kann auch ein Profil mit zwei oder drei Etagen von Kammern benutzt werden, wobei z.B. durch eine mittlere Etage von Kammern die Abgase eines Brenners oder Motors durchgeleitet werden können, während in den äusseren Etagen der Wärmeträger der Wärmepumpe zirkuliert.

PATENTANSPRUECHE

1. Gefäss-System für einen Wärmeträger, insbesondere Umwelt-Wärmetauscher, mit flachen oder gerillten Wärmetauscher-Elementen, dadurch gekennzeichnet, dass die Wärmetauscher-Elemente in beliebiger Richtung verschiebbar auf Trägerprofilen angeordnet sind.

2. System nach Anspruch 1, dadurch gekennzeichnet, dass die Elemente mittels kreuzschlittenartiger Montageorgane mit den Trägerprofilen verbunden sind.

3. System nach Anspruch 2, dadurch gekennzeichnet, dass ein erster Teil des Montageorganes längs eines Trägerprofils verschiebbar ist, während ein zweiter, mit mindestens einem Element verbunener Teil des Montageorganes quer zur Schieberichtung des ersten Teils auf demselben verschiebbar ist.

4. System nach Anspruch 3, dadurch gekennzeichnet, dass einseitig offene Rechteckprofile vorgesehen sind, welche mit einwärts gerichteten Flanschen in Seitennuten der ersten Teile der Montageorgane greifen.

5. System nach einem der Ansprüche 3 oder 4, dadurch gekennzeichnet, dass der zweite Teil der Montageorgane mindestens einen Gewindezapfen aufweist, der durch aufliegende Elemente durchgreift und mit welchem eine Gegenmutter verschraubt ist.

6. System nach irgendeinem der Ansprüche 1-5, dadurch gekennzeichnet, dass die Elemente aus flachen oder gerillten Hohlkammerprofilen mit Kanälen aufgebaut sind, wobei die Hohlprofile an den Schmalseiten L-förmige, ineinandergreifende Verbindungsleisten aufweisen.

7. System nach Anspruch 6, dadurch gekennzeichnet, dass die Verbindungsleisten stellenweise Lücken aufweisen, durch welche die Gewindezapfen der Montageorgane durchragen.

8. System nach irgendeinem der Ansprüche 2-7 dadurch gekennzeichnet, dass zwischen den Montageorganen Distanz- oder Stützorgane an den Trägerprofilen angebracht sind, auf welche Distanz- oder Stützorgane die Elemente lose aufliegen.

9. System nach irgendeinem der Ansprüche 2-8, dadurch gekennzeichnet, dass mit den Trägerprofilen Sicherungsstifte verschraubt sind, gegen welche Montageorgane anliegen.

lo. System nach irgendeinem der Ansprüche 1-9, dadurch gekennzeichnet, dass Vorlauf- und Rücklauf-Sammelleitungen in Trägerprofilen längsverschiebbar gehalten und an einer Stelle unverschiebbar gesichert sind.

11. System nach Anspruch lo, dadurch gekennzeichnet, dass die Sammelleitungen mittels flexiblen Schlauchbögen mit Anschlüssen der Elemente verbunden sind.

12. System nach irgendeinem der Ansprüche 1-11 dadurch, gekennzeichnet, dass mehrere Elemente im Abstand voneinander angeordnet sind.

13. System nach irgendeinem der Ansprüche 1-12, dadurch gekennzeichnet, dass längs des Umfangs der Wärmetauscher-Elemente zwischen denselben und dem sie tragenden Baukörper aufblasbare Dichtungsschläuche verlegt sind, um bei heissem Wetter zwischen den Wärmetauscher-Elementen und dem Baukörper geschlossene isolierende Luftkissen zu erzeugen.

14. Verwendung des Systems nach Anspruch 1 auf einem geneigten Dach, dadurch gekennzeichnet, dass die Trägerprofile in der Fall-Linie des Daches angeordnet sind.

0048694

- 3 -

15. Verwendung nach Anspruch, dadurch gekennzeichnet, dass die Trägerprofile mittels zwischen den Ziegeln durchgreifender Dachhaken montiert sind.

16. System nach Anspruch 1, dadurch gekennzeichnet, dass mindestens ein Wärmetauscher-Element zu einer Spirale oder Schnecke geformt ist, die lose in einem Käfig gehalten ist.

FIG.1

1/6
1/6

FIG.2

# FIG.3

# FIG.6

FIG.4

## FIG.5

FIG. 7    6/6

412   46    4    43

4    4    4

416

45    44    42

2

FIG. 8

2    40

46

4

46    41

47    47